# EUROPEAN PATENT SPECIFICATION

(11) **EP 3 617 352 B1**
(45) Date of publication and mention of the grant of the patent: **25.11.2020**
(21) Application number: 18809700.0
(22) Date of filing: 24.05.2018
(51) Int. Cl.: D01F 6/90, C08G 69/30, D01F 6/60, D01F 1/10, D01F 6/80

(54) **SEMI-AROMATIC POLYAMIDE FIBER**
SEMIAROMATISCHE POLYAMIDFASER
FIBRE POLYAMIDE SEMI-AROMATIQUE

(30) Priority: 29.05.2017 JP 2017105800
(43) Date of publication of application: 04.03.2020
(73) Proprietor: Kuraray Co., Ltd., Kurashiki-shi, Okayama 710-0801 (JP)
(72) Inventor: TOMOSUGI, Tetsuya, Kurashiki-shi Okayama 713-8550 (JP); UEHATA, Akihiro, Sakai-shi Fukui 910-0273 (JP); OKAMOTO, Tetsuya, Saijo-shi Ehime 793-8585 (JP)
(74) Representative: Müller-Boré & Partner Patentanwälte PartG mbB
(86) International application number: PCT/JP2018/020022
(87) International publication number: WO 2018/221376

(56) References cited:
- JP-A- H0 913 222
- JP-A- H10 324 800
- JP-A- 2003 055 549
- JP-A- 2004 221 023
- JP-A- 2005 273 034
- JP-A- 2007 046 200
- JP-A- 2015 505 884
- US-A- 4 293 688

## Description

The present invention relates to a semi-aromatic polyamide fiber that has acid resistance and exhibits heat resistance for a long period of time.

Crystalline polyamides represented by nylon 6 and nylon 66 have thermal characteristics, strength characteristics, and rigidity in well-balanced manner and are suitable for many applications such as clothing, fibers for industrial materials, and engineering plastics. However, it has been pointed out that these general-purpose aliphatic polyamides have problems such as insufficient heat resistance and poor dimensional stability due to water absorption. In particular, crystalline polyamides have recently been required to have chemical resistance such as acid resistance and have often been required to have long-term heat resistance in use under a high temperature environment in applications such as automobile parts, electric/electronic parts, and fibers.

In order to improve the acid resistance of polyamide fibers, the Patent Document 1 (Japanese Unexamined Patent Publication No. H09-256219) proposes a semi-aromatic polyamide fiber containing an aromatic dicarboxylic acid and an aliphatic alkyldiamine having 6 to 12 carbon atoms. The semi-aromatic polyamide fiber is a polyamide composed of a long-chain alkyl diamine and an aromatic dicarboxylic acid. Thus, although the polyamide fiber is excellent in acid resistance, it is easily decomposed by oxidation in air and is thus inferior in long-term heat resistance. Therefore, the polyamide fiber has a problem in that it cannot be used under a high temperature environment for a long period of time.

In order to improve heat resistance of polyamide compositions, the Patent Document 2 (Japanese Unexamined Patent Publication No. 2003-55549) proposes a polyamide composition containing 0.01 to 5 parts by weight of a copper compound in a semi-aromatic polyamide composition that is composed of an aromatic dicarboxylic acid and an aliphatic alkyldiamine having 4 to 14 carbon atoms. However, when the polyamide fiber containing a copper compound is formed into a fiber by melt spinning, the melt viscosity of the resin becomes high. Thus, the polyamide fiber has a problem in that spinning properties are inferior. Patent Document 3 discloses a fiber for reinforcing radiator hose and radiator hose.

Patent Document 1: Japanese Unexamined Patent Publication No. H09-256219
Patent Document 2: Japanese Unexamined Patent Publication No. 2003-55549
Patent Document 3: JP 2005/273034

An object of the present invention is to provide a semi-aromatic polyamide fiber that solves the above problems and has acid resistance, excellent long-term heat resistance, and good spinning properties.

In order to solve the above problems, the inventors of the present application conducted studies. In the studies, the inventors of the present application focused on the fact that when a semi-aromatic polyamide containing a copper compound is melt-spun at a temperature higher than or equal to a melting point (around 300°C), the melt viscosity of the semi-aromatic polyamide becomes high at that temperature due to decomposition and cross-linking reactions of a polymer main chain caused by catalysis of the copper compound, which leads to deterioration of the spinning properties, and found that a semi-aromatic polyamide fiber having acid resistance and further having excellent long-term heat resistance and good spinning properties can be obtained by lowering the melting point (to 280°C or less) of the semi-aromatic polyamide containing a copper compound without changing the glass transition point. As a result, the inventors of the present application reached the present invention.

That is, the present invention is a semi-aromatic polyamide fiber containing a semi-aromatic polyamide having a melting point of 280°C or less, wherein the semi-aromatic polyamide fiber satisfies all of the following conditions (1) to (3):
(1) in the semi-aromatic polyamide, a dicarboxylic acid component is an aromatic dicarboxylic acid, and 40 mol% to 80 mol% of a diamine component is 2-methyl-1,8-octanediamine;
(2) the semi-aromatic polyamide comprises 50 ppm to 500 ppm of a copper compound in terms of copper, wherein the copper compound is one or more compounds selected from the group consisting of copper(I) chloride, copper(I) bromide, copper(I) iodide, copper(II) chloride, copper(II) bromide, copper(II) iodide, copper(II) phosphate, copper(II) pyrophosphate, copper sulfide, and copper nitrate; and organic copper compounds such as copper salts of organic carboxylic acids such as copper acetate; and copper acetylacetonate; and
(3) the semi-aromatic polyamide fiber has a peak temperature of a glass transition point from 120°C to 140°C.

In the semi-aromatic polyamide fiber, the semi-aromatic polyamide may further contain 300 ppm to 3000 ppm of an alkali metal halide compound in terms of alkali metal.

In the semi-aromatic polyamide fiber, a strength retention rate after subjecting the semi-aromatic polyamide fiber to heat treatment at 150°C for 500 hours may be 90% or more.

The present invention can provide a semi-aromatic polyamide fiber that has acid resistance, excellent long-term heat resistance, and good spinning properties.

The present invention will be described in detail below.

Since the melting point and the glass transition point of the semi-aromatic polyamide are high, the semi-aromatic polyamide has excellent heat resistance. On the other hand, since the semi-aromatic polyamide requires a high molding temperature, a decomposition reaction or a cross-linking reaction of the polymer main chain easily occurs by catalysis of inorganic particles contained in the resin, and it has been difficult to form the semi-aromatic polyamide containing inorganic particles into a fiber by melt spinning. Hence, in order to obtain a semi-aromatic polyamide having both heat resistance and acid resistance and having excellent spinning properties, the melting point of the semi-aromatic polyamide is lowered by selecting an aromatic dicarboxylic acid as a dicarboxylic acid component of the semi-aromatic polyamide and causing 40 mol% to 80 mol% of diamine component to be 2-methyl-1,8-octanediamine, thereby allowing the semi-aromatic polyamide to be melt-spun at a low temperature. Further, a function of an additive for imparting heat resistance is caused to be sufficiently exhibited without changing the glass transition point of the semi-aromatic polyamide. Accordingly, a semi-aromatic polyamide fiber that has acid resistance and maintains heat resistance for a long period of time can be obtained.

It is important that the dicarboxylic acid component in the semi-aromatic polyamide according to the present invention is an aromatic dicarboxylic acid. The aromatic dicarboxylic acid is preferably terephthalic acid in light of acid resistance and heat resistance, and one kind of aromatic dicarboxylic acids such as isophthalic acid, 2,6-naphthalenedicarboxylic acid, 2,7-naphthalenedicarboxylic acid, 1,4-naphthalenedicarboxylic acid, 1,4-phenylenedioxydiacetic acid, 1,3-phenylenedioxydiacetic acid, diphenic acid, dibenzoic acid, 4,4'-oxydibenzoic acid, diphenylmethane-4,4'-dicarboxylic acid, diphenylsulfone-4,4'-dicarboxylic acid, and 4,4'-biphenyldicarboxylic acid may be used alone, or two or more kinds of them may be used in combination. The content of the aromatic dicarboxylic acid is 60 mol% or more, preferably 75 mol% or more of the dicarboxylic acid component. Examples of the dicarboxylic acid other than the aromatic dicarboxylic acids include aliphatic dicarboxylic acids such as malonic acid, dimethyl malonic acid, succinic acid, 3,3-diethylsuccinic acid, glutaric acid, 2,2-dimethylglutaric acid, adipic acid, 2-methyladipic acid, trimethyladipic acid, pimelic acid, azelaic acid, sebacic acid, and suberic acid; and alicyclic dicarboxylic acids such as 1,3-cyclopentanedicarboxylic acid and 1,4-cyclohexanedicarboxylic acid. One kind of these dicarboxylic acids may be used alone, or two or more kinds of them may be used in combination. Among them, 100% of the dicarboxylic acid component is an aromatic dicarboxylic acid in light of acid resistance and heat resistance. Further, the semi-aromatic polyamide may further contain a polycarboxylic acid such as trimellitic acid, trimesic acid, and pyromellitic acid within a range in which a fiber can be easily formed.

It is important that 40 mol% to 80 mol% of the diamine component in the semi-aromatic polyamide according to the present invention is 2-methyl-1,8-octanediamine. The range is more preferably from 40 mol% to 70 mol%, particularly preferably from 40 mol% to 60 mol%. If the content of 2-methyl-1,8-octanediamine is less than 40 mol%, the melting point of the semi-aromatic polyamide is increased. Thus, the melt spinning temperature is also increased, and gelation occurs by decomposition and cross-linking reactions of the polymer main chain caused by a copper compound, thereby reducing the spinning properties. In addition, if the content of 2-methyl-1,8-octanediamine is more than 80 mol%, the melting point is increased as well. Thus, the melt spinning temperature is increased, thereby deteriorating spinning properties.

The diamine component besides 2-methyl-1,8-octanediamine is preferably an aliphatic alkylenediamine having 6 to 12 carbon atoms, and examples of the aliphatic alkylenediamine include aliphatic diamines such as 1,6-hexanediamine, 1,8-octanediamine, 1,9-nonanediamine, 1,10-decanediamine, 1,11-undecanediamine, 1,12-dodecanediamine, 2-methyl-1,5-pentanediamine, 3-methyl-1,5-pentanediamine, 2,2,4-trimethyl-1,6-hexanediamine, 2,4,4-trimethyl-1,6-hexanediamine, and 5-methyl-1,9-nonanediamine. Among them, 1,9-nonanediamine is preferably used in combination in light of acid resistance. The content of this aliphatic alkylenediamine is 60 mol% or less of the diamine component and is particularly preferably 50 mol% or less of the diamine component because the melting point is lowered.

Examples of the diamine component other than the aliphatic alkylenediamine include aliphatic diamines such as ethylenediamine, propylenediamine, and 1,4-butanediamine; alicyclic diamines such as cyclohexanediamine, methyl cyclohexanediamine, isophoronediamine, norbornene dimethyldiamine, and tricyclodecane dimethyldiamine; and aromatic diamines such as p-phenylenediamine, m-phenylenediamine, xylylenediamine, xylenediamine, 4,4'-diamino diphenylmethane, 4,4'-diamino diphenylsulfone, and 4,4'-diamino diphenylether; and mixtures thereof. One kind of these diamine components may be used alone, or two or more kinds of them may be used in combination.

If 2-methyl-1,8-octanediamine and 1,9-nonanediamine are used in combination as an aliphatic alkylenediamine, a mole ratio between the 2-methyl-1,8-octanediamine and the 1,9-nonanediamine is preferably the former : the latter = 40 : 60 to 80 : 20 from the viewpoint of lowering the melting point of the semi-aromatic polyamide. More preferably, the former : the latter = 40 : 60 to 60 : 40.

The ratio of [CONH/CH₂] in the molecular chain of the semi-aromatic polyamide used in the present invention is preferably 1/2 to 1/8, particularly preferably 1/3 to 1/5. A resin containing a semi-aromatic polyamide having the ratio in this range is suitable for use in bus filters which are required to be particularly excellent in acid resistance and heat resistance.

The intrinsic viscosity of the semi-aromatic polyamide (measured at 30°C in concentrated sulfuric acid) is preferably 0.6 dl/g to 2.0 dl/g, more preferably 0.6 dl/g to 1.8 dl/g, particularly preferably 0.7 dl/g to 1.6 dl/g. The semi-aromatic polyamide having an intrinsic viscosity in the range is less prone to cause decomposition and cross-linking reactions of the polymer main chain and has good melt viscosity characteristics at the time of fiber formation, and further, a fiber obtained therefrom is excellent in acid resistance and heat resistance.

Further, preferably 10% or more, more preferably 40% or more, yet more preferably 70% or more of the terminal group of the molecular chain in the semi-aromatic polyamide is sealed with a terminal sealing agent. By sealing the terminal of the molecular chain, the decomposition and cross-linking reactions of the polymer main chain are less prone to occur, good melt viscosity characteristics are obtained at the time of fiber formation, and further, a fiber obtained therefrom is excellent in acid resistance and heat resistance. The terminal sealing agent may be any monofunctional compound having reactivity with an amino group or a carboxyl group at the terminal of polyamide and is not particularly limited, but is preferably a monocarboxylic acid or monoamine from the viewpoint of reactivity, stability of the sealed terminal, and the like. The terminal sealing agent is more preferably a monocarboxylic acid from the viewpoint of ease of handling, reactivity, stability of the sealed terminal, price, and the like. Examples of the monocarboxylic acid include acetic acid, propionic acid, butyric acid, valeric acid, caproic acid, caprylic acid, lauric acid, tridecylic acid, myristic acid, palmitic acid, stearic acid, and benzoic acid. The terminal sealing ratio can be determined from an integral value of a characteristic signal corresponding to each terminal group by ¹H-NMR.

A method for producing the semi-aromatic polyamide is not particularly limited, and any method known as a method for producing a crystalline polyamide may be used. For example, the semi-aromatic polyamide can be produced by a solution polymerization method or an interfacial polymerization method using an acid chloride and a diamine as raw materials, a melt polymerization method using a dicarboxylic acid or an alkyl ester thereof and a diamine as raw materials, a solid-phase polymerization method, or the like.

As an example, the semi-aromatic polyamide can be easily produced by causing all of a terminal sealing agent, a catalyst, a diamine component, and a dicarboxylic acid component to react with each other to produce a nylon salt, then forming the nylon salt into a prepolymer having an intrinsic viscosity of 0.15 dl/g to 0.30 dl/g at a temperature of 280°C or less, and further subjecting the prepolymer to solid phase polymerization or polymerizing the prepolymer using a melt extruder. If the final stage of the polymerization is conducted by solid phase polymerization, the polymerization is conducted preferably under reduced pressure or under an inert gas stream, and the polymerization temperature is preferably in the range from 200°C to 250°C because a polymerization rate becomes high, the productivity becomes excellent, and coloring and gelation can be effectively reduced. The polymerization temperature is preferably 370°C or less in the case where the final stage of the polymerization is conducted using a melt extruder because a semi-aromatic polyamide which is hardly decomposed and free of deterioration is obtained. Examples of the catalyst for the polymerization include phosphoric acid, phosphorous acid, and hypophosphorus acid, and ammonium salts thereof, metal salts thereof, and esters thereof. Among them, sodium phosphinate is preferable from the viewpoint of availability, ease of handling, and the like.

It is important that the semi-aromatic polyamide according to the present invention contains a copper compound in order to impart heat resistance to the fiber. According to the present invention, the copper compound to be used is one or more compounds selected from copper(I) chloride, copper(I) bromide, copper(I) iodide, copper(II) chloride, copper(II) bromide, copper(II) iodide, copper(II) phosphate, copper(II) pyrophosphate, copper sulfide, and copper nitrate; and organic copper compounds such as copper salts of organic carboxylic acids such as copper acetate; and copper acetylacetonate. Among them, the copper compound is preferably a copper(I) compound, more preferably a copper(I) halide, yet more preferably copper(I) iodide. One kind of these copper compounds may be used alone, or two or more kinds of them may be used in combination. The content of these copper compounds in the semi-aromatic polyamide is required to be in the range from 50 ppm to 500 ppm, preferably from 100 ppm to 400 ppm, in terms of copper. If the content of the copper compound is less than 50 ppm, it becomes difficult to obtain a sufficient strength retention rate after a heat resistance evaluation. If the content of the copper compouond is larger than 500 ppm, gelation occurs by decomposition and cross-linking reactions of the polymer main chain, and spinning properties are deteriorated.

The semi-aromatic polyamide according to the present invention preferably contains 1 to 20 parts by weight of an alkali metal halide compound relative to 1 part by weight of the copper compound in order to impart heat resistance to the fiber. Examples of the alkali metal halide compound include lithium chloride, lithium bromide, lithium iodide, sodium fluoride, sodium chloride, sodium bromide, sodium iodide, potassium fluoride, potassium chloride, potassium bromide, and potassium iodide. One kind of these alkali metal halide compounds may be used alone, or two or more kinds of them may be used in combination. Among them, potassium iodide is preferable. The ratio between the copper compound and the alkali metal halide compound is preferably in the range from 1 : 1 to 1 : 15 (by weight). The content of the alkali metal halide compound in the semi-aromatic polyamide is preferably in the range from 300 ppm to 3000 ppm, preferably from 600 ppm to 2400 ppm in terms of alkali metal. The copper compound and the alkali metal halide compound may be used in a solid state or in a state of a solution dissolved in a solvent such as water, methanol, ethanol, 2-propanol, 1,4-dioxane, dimethoxyethane (DME), N, N-dimethylformamide (DMF), dimethyl sulfoxide (DMSO), or the like.

Besides the copper compound and the alkali metal halide compound, a stabilizer, a colorant, an ultraviolet absorber, a photostabilizer, an antioxidant, an antistatic agent, a flame retardant, a plasticizer, a lubricant, a crystallization rate reducing agent, and the like may be added as needed.

It is important that the semi-aromatic polyamide fiber according to the present invention has a melting point of 280°C or less. It is not preferred that the melting point is more than 280°C because melt spinning at a high spinning temperature higher than 280°C induces decomposition and cross-linking reactions of the polymer main chain caused by catalysis of the copper compound contained in the resin, and spinning properties are thus deteriorated.

It is important that the peak temperature of the glass transition point in the semi-aromatic polyamide fiber according to the present invention is in the range from 120°C to 140°C. It is not preferred that the peak temperature is less than 120°C because heat resistance is deteriorated. It is not preferred that the peak temperature is more than 140°C because it becomes difficult to perform heat molding after fiber formation.

The following describes a method for producing the semi-aromatic polyamide fiber according to the present invention. The semi-aromatic polyamide is usually melt-spun using a melt extruder and stretched, but it is preferred to use a screw-type extruder. The semi-aromatic polyamide can be formed into a fiber by melting it at a temperature of the melting point or more and less than 300°C and spinning the molten semi-aromatic polyamide out from a spinneret nozzle at a molten state retention time of 30 minutes or less. When the melting temperature and the retention time are within the above ranges, thermal decomposition of the polyamide at the time of spinning can be reduced, and the spinning can be performed without thermal deterioration of the copper compound and the alkali metal halide compound contained in the fiber caused in the resin.

A yarn spun out in the manner described above is then taken up by a take-up roller or the like. At that time, a heating or heat retaining zone may be provided immediately below the nozzle, a zone cooled by a blowing chamber or the like may be provided, or an oil agent may be applied to the spun yarn, as needed. Stretching is preferably performed at 270°C or less, more preferably in the range from 120°C to 230°C using a heating bath, a heated vapor blowing, a roller heater, a contact plate heater, a non-contact plate heater, or the like. Further, the stretching ratio is preferably 2 times or more, more preferably 3 times or more. At that time, when the yarn is stretched at a temperature higher than 270°C, deterioration of the semi-aromatic polyamide, recrystallization of crystals, or the like may occur, and fiber strength may be reduced. The stretching may be followed by a fixed-length heat treatment, a tensioned heat treatment, or a relaxed heat treatment at 120°C to 270°C, as needed. In addition to the above method, direct drawing may also be performed.

From the viewpoint of heat resistance, the semi-aromatic polyamide fiber according to the present invention has a strength retention rate of preferably 80% or more, more preferably 85% or more, after the heat treatment at 150°C for 500 hours. In addition, from the viewpoint of acid resistance, the semi-aromatic polyamide fiber according to the present invention has a strength retention rate of preferably 50% or more, more preferably 55% or more, particularly preferably 60% or more after the treatment in 200 cc of an acidic aqueous solution to be described later at 120°C for 500 hours.

The semi-aromatic polyamide fiber thus obtained in the form of a fiber itself is suitably used in a plastic reinforcing material (FRP), a cement reinforcing material (FRC), a rubber reinforcing material (FRR), a tire cord, a screen gauze, air bag, and the like by taking advantage of the characteristics. Moreover, the semi-aromatic polyamide fiber is formed into a nonwoven fabric, and the nonwoven fabric is suitably used in an alkaline battery structural article such as a separator for an alkaline battery, a liquid filter, an air filter, an oil mist separator, a geotextile, a canvas for papermaking, and the like. The content of the semi-aromatic polyamide fiber according to the present invention in the nonwoven fabric to be used in the above-mentioned applications is preferably 50 wt% or more, particularly preferably 70 wt% or more.

Examples of the fiber contained in the nonwoven fabric other than the above-mentioned semi-aromatic polyamide fiber include a general-purpose aliphatic polyamide fiber such as nylon 6 and nylon 66; a composite fiber containing one kind of polyolefin-based resins such as an ethylene-vinyl alcohol copolymer, polypropylene, polyethylene, polybutene, polymethylpentene, an ethylene-propylene copolymer, and an ethylene-butene copolymer alone or two kinds of them; a cellulose-based fiber obtained by mercerizing a natural cellulose fiber; and a mercerized pulp. Further, by using a fiber having a melting point lower than that of the above-mentioned semi-aromatic polyamide fiber, a known hot-melt binder fiber, and an adhesive, the shape stability of the nonwoven fabric can be improved.

The nonwoven fabric containing the above-mentioned semi-aromatic polyamide fiber can be obtained by any production method. The nonwoven fabric can be produced by a commonly used means of forming a fibrous web (nonwoven fabric before entanglement or bonding) and then bonding or entangling fibers in the fibrous web. The nonwoven fabric thus obtained may be used as it is, or may be used as a laminate of pieces of the nonwoven fabric. Examples of a method for forming a fibrous web include: a dry method such as a card method and an air-lay method; a wet method such as a papermaking method; a spun bonding method; and a melt-blowing method. Among them, the wet method and the melt-blowing method are suitable methods for forming a fibrous web because the fibrous web obtained by each method is dense and has a uniform surface state, and when the fibrous web is used as a battery separator, deposition of metal and movement of an electrode active material can be prevented. The nonwoven fabric may be used as a laminate obtained by laminating fibrous webs formed by the above-described methods in combination.

Other than the above-mentioned methods, a nonwoven fabric can be formed by a burst fiber method in combination with a split film method or a foam film method. Examples

The following describes the present invention in detail with reference to the examples. The present invention, however, is not limited by these examples. The measurement values in the examples are obtained by measurements according to the following methods.

### (1) Glass transition point, melting point

The glass transition point and the melting point of a fiber were measured by raising the temperature to 400°C at a temperature rising rate of 10°C/min under a nitrogen atmosphere using a "TA3000-DSC" manufactured by Mettler Corporation. The glass-transition temperature was determined from the inflection points observed on the DSC chart, and the exothermic peak temperature was determined as the melting point.

### (2) Heat resistance

From the strength of a fiber after leaving a semi-aromatic polyamide fiber in a hot air oven set at 150°C for 500 hours to expose it to high temperature and the strength of the fiber before the treatment, a strength retention rate (the strength after the treatment/the strength before the treatment × 100%) was evaluated. The strength of the fiber (cN/dtex) was measured in accordance with JIS L 1013.

### (3) Acid resistance

From the strength of a fiber after placing 5 g of the fiber in 200 cc of acidic aqueous solution containing 1.5×10⁻⁴ mol/L nitric acid, 3.0 × 10⁻⁵ mol/L sulfuric acid, and 2.1 × 10⁻⁴ mol/L formic acid and treating it at 120°C for 500 hours and the strength of the fiber before the treatment, a strength retention rate (the strength after the treatment/the strength before the treatment × 100%) was evaluated. The strength of the fiber (cN/dtex) was measured in accordance with JIS L 1013.

### (4) Spinning properties

The spinning properties were evaluated according to the following criteria.
○: No yarn breakage was found in continuous spinning for 24 hours.
×: At least one yarn breakage was found in continuous spinning for 24 hours.

### (Example 1)

In an autoclave having an internal capacity of 20 L, 19.5 mol of terephthalic acid, 10 mol of 1,9-nonanediamine, 10 mol of 2-methyl-1,8-octanediamine, 1 mol of benzoic acid, sodium phosphinate monohydrate (0.1 wt% relative to the raw materials), and 2.2 L of distilled water were placed, and nitrogen substitution was then conducted in the autoclave. Thereafter, the mixture was stirred at 100°C for 30 minutes, and the internal temperature was raised to 210°C over a period of 2 hours. At that time, the pressure in the autoclave was raised up to 22 kgf/cm². After the reaction was continued for 1 hour, the internal temperature was raised to 230°C and then maintained at 230°C for 2 hours, and the reaction was further continued while the pressure was maintained at 22 kgf/cm² by gradually removing the water vapor. Subsequently, the pressure was lowered to 10 kgf/cm² over a period of 30 minutes, and the reaction was further continued for 1 hour to obtain a prepolymer. The prepolymer was dried at 100°C under reduced pressure for 12 hours and pulverized to a size of 2 mm or less. The pulverized product was then subjected to solid phase polymerization at 230°C under 0.1 mmHg for 10 hours to obtain a semi-aromatic polyamide. The obtained polymer was found to contain 100 mol% aromatic dicarboxylic acid as a dicarboxylic acid component and 50 mol% 2-methyl-1,8-octanediamine and 50 mol% 1,9-nonanediamine as a diamine component.

To the obtained polymer, 1 wt% "KG HS 01 p" manufactured by PolyAd Services (a mixture of copper iodide and potassium iodide (a copper compound: 3.5 wt% in terms of copper, a potassium compound: 20.0 wt% in terms of potassium)) was added as a copper compound and a metal halide compound, relative to the weight of the polymer, and the mixture was then melt-extruded using a biaxial extruder to prepare a polymer containing 350 ppm of the copper compound and 2000 ppm of the potassium compound. The polymer was discharged from a round hole nozzle having a hole of 0.35 mm Φ × 100 mm at 285°C, and the discharged polymer was then wound up at a winding rate in the range from 500 m/min to 2000 m/min while the discharge rate and the winding rate were adjusted so that the draft (ratio) between the discharge rate and the winding rate was in the range from 10 to 50. Then, the polymer was stretched and shrunk using a first water bath set at 85°C and a second water bath set at 95°C. Thus, a tow having about 1000 denier/100 filaments was obtained. The stretching ratio was 0.8 times the maximum stretching ratio. Table 1 shows the contents of the copper compound and the potassium compound in the obtained stretched yarn and the results of various evaluations of the stretched yarn.

### (Example 2)

Fiber formation was performed in the same manner as in Example 1 except that a 0.5 wt% mixture of copper iodide and potassium iodide was added. The obtained stretched yarn was evaluated, and Table 1 shows the results.

### (Example 3)

Fiber formation was performed in the same manner as in Example 1, except that the amount of 1,9-nonanediamine was changed to 6 mol, the amount of 2-methyl-1,8-octanediamine was changed to 14 mol, and the obtained semi-aromatic polyamide contains 70 mol% 2-methyl-1,8-octanediamine and 30 mol% 1,9-nonanediamine as a diamine component. The obtained stretched yarn was evaluated, and Table 1 shows the results.

### (Comparative Example 1)

A polymer was produced in the same manner as in Example 1 except that the amount of 1,9-nonanediamine was changed to 16 mol, the amount of 2-methyl-1,8-octanediamine was changed to 4 mol, the obtained semi-aromatic polyamide contains 20 mol% 2-methyl-1,8-octanediamine and 80 mol% 1,9-nonanediamine as a diamine component, and fiber formation was performed at a spinning temperature of 335°C. The obtained stretched yarn was evaluated, and Table 1 shows the results.

### (Comparative Example 2)

A polymer was produced in the same manner as in Example 1 except that 1,9-nonanediamine was not added, the amount of 2-methyl-1,8-octanediamine was changed to 20 mol, and the obtained semi-aromatic polyamide contains 100 mol% 2-methyl-1,8-octanediamine as a diamine component, and fiber formation was performed at a spinning temperature of 305°C. The obtained stretched yarn was evaluated, and Table 1 shows the results.

### (Comparative Example 3)

Fiber formation was performed in the same manner as in Example 1 except that a 0.1 wt% mixture of copper iodide and potassium iodide was added. The obtained stretched yarn was evaluated, and Table 1 shows the results.

### (Comparative Example 4)

A nylon 66 polymer was melt-extruded. The polymer was then discharged from a round hole nozzle having a hole of 0.35 mm Φ × 100 mm at 285°C, and the discharged polymer was wound up at a winding rate in the range from 500 m/min to 2000 m/min while the discharge rate and the winding rate were adjusted so that the draft (ratio) between the discharge rate and the winding rate was in the range from 10 to 50. The polymer was thereafter stretched and shrunk using a first water bath set at 85°C and a second water bath set at 95°C. Thus, a tow having about 1000 denier/100 filaments was obtained. The stretching ratio was 0.8 times the maximum stretching ratio. The obtained stretched yarn was evaluated, and Table 1 shows the results.

**[Table 1]**

| | Semi-aromatic polyamide | | | Additive | | G lass transition temperature | Melting point | Spinning temperature | Spinning properties | Strength retention rate after heat resistance evaluation (under high temperature atmosphere at 150° C) | Strength retention rate after heat resistance evaluation (in acidic solution at 120° C) |
|---|---|---|---|---|---|---|---|---|---|---|---|
| | Dicarboxylic acid component Diamine component | | | Copper compound | Potassium compound | | | | | | |
| | Terephthalic acid | 2-methyl-1,8-octenediamine | 1,9-nonanediamine | | | | | | | | |
| | mol% | mol% | mol% | ppm | ppm | °C | °C | °C | | % | % |
| Ex. 1 | 100 | 50 | 50 | 350 | 2000 | 123 | 264 | 285 | ○ | 81 | 66 |
| Ex. 2 | 100 | 50 | 60 | 175 | 1000 | 123 | 264 | 285 | ○ | 90 | 68 |
| Ex. 3 | 100 | 70 | 30 | 350 | 2000 | 121 | 265 | 285 | ○ | 89 | 63 |
| Comp. Ex. 1 | 100 | 20 | 80 | 350 | 2000 | 126 | 304 | 335 | × | - | - |
| Comp. Ex. 2 | 100 | 100 | 0 | 350 | 2000 | 127 | 285 | 305 | × | - | - |
| Comp. Ex. 3 | 100 | 50 | 50 | 36 | 200 | 123 | 265 | 285 | ○ | 45 | 69 |
| Comp. Ex. 4 | Nylon 66 | | | 0 | 0 | 50 | 257 | 285 | ○ | 70 | 0 |

Table 1 demonstrated as follows. In Examples 1 to 3, each semi-aromatic polyamide fiber had good spinning properties and excellent strength retention ratios after the evaluations of heat resistance and acid resistance. In Comparative Examples 1 and 2, each semi-aromatic polyamide had a melting point of more than 280°C, and the polymer was thus gelated in the spinning step, and spinning properties were poor. In Comparative Example 3, the content of the copper compound contained in the semi-aromatic polyamide fiber was low, and heat resistance was thus insufficient. In Comparative Example 4, the aliphatic polyamide fiber was obtained, and heat resistance and acid resistance were thus insufficient.

The semi-aromatic polyamide fiber according to the present invention is a fiber which has excellent acid resistance and exhibits long-term heat resistance compared to general-purpose aliphatic polyamide fibers, and is thus useful for a battery structural article such as a battery separator, a liquid filter, an air filter, a plastic reinforcing material (FRP), a cement reinforcing material (FRC), a rubber reinforcing material (FRR), a screen gauze, an air bag, an oil mist separator, a geotextile, a canvas for papermaking, tire cords, and the like.

## Claims

1. A semi-aromatic polyamide fiber comprising a semi-aromatic polyamide having a melting point of 280°C or less, wherein the semi-aromatic polyamide fiber satisfies all of the following conditions (1) to (3):
(1) in the semi-aromatic polyamide, a dicarboxylic acid component is an aromatic dicarboxylic acid, and 40 mol% to 80 mol% of a diamine component is 2-methyl-1,8-octanediamine;
(2) the semi-aromatic polyamide comprises 50 ppm to 500 ppm of a copper compound in terms of copper, wherein the copper compound is one or more compounds selected from the group consisting of copper(I) chloride, copper(I) bromide, copper(I) iodide, copper(II) chloride, copper(II) bromide, copper(II) iodide, copper(II) phosphate, copper(II) pyrophosphate, copper sulfide, and copper nitrate; and organic copper compounds such as copper salts of organic carboxylic acids such as copper acetate; and copper acetylacetonate; and
(3) the semi-aromatic polyamide fiber has a peak temperature of a glass transition point from 120°C to 140°C,
wherein the glass transition point and the melting point of a fiber were measured by raising the temperature to 400°C at a temperature rising rate of 10°C/min under a nitrogen atmosphere using a "TA3000-DSC" manufactured by Mettler Corporation, determining the glass-transition temperature from the inflection points observed on the DSC chart, and determining the exothermic peak temperature as the melting point.

2. The semi-aromatic polyamide fiber of claim 1, wherein the semi-aromatic polyamide comprises 300 ppm to 3000 ppm of an alkali metal halide compound in terms of alkali metal.

3. The semi-aromatic polyamide fiber of claim 1 or 2, wherein a strength retention rate after subjecting the semi-aromatic polyamide fiber to heat treatment at 150°C for 500 hours is 80% or more.

## Patentansprüche

1. Halbaromatische Polyamidfaser, umfassend ein halbaromatisches Polyamid mit einem Schmelzpunkt von 280°C oder weniger, wobei die halbaromatische Polyamidfaser alle der folgenden Bedingungen (1) bis (3) erfüllt:
(1) in dem halbaromatischen Polyamid ist eine Dicarbonsäurekomponente eine aromatische Dicarbonsäure und 40 Mol-% bis 80 Mol-% einer Diaminkomponente ist 2-Methyl-1,8-Octandiamin,
(2) das halbaromatische Polyamid umfasst 50 ppm bis 500 ppm einer Kupferverbindung bezogen auf Kupfer, wobei die Kupferverbindung eine oder mehrere Verbindungen ist, ausgewählt aus der Gruppe, bestehend aus Kupfer(I)chlorid, Kupfer(I)bromid, Kupfer(I)iodid, Kupfer(II)chlorid, Kupfer(II)bromid, Kupfer(II)iodid, Kupfer(II)phosphat, Kupfer(II)pyrophosphat, Kupfersulfid und Kupfernitrat, und organischen Kupferverbindungen wie Kupfersalzen von organischen Carbonsäuren wie Kupferacetat und Kupferacetylacetonat, und
(3) die halbaromatische Polyamidfaser weist eine Spitzentemperatur eines Glasübergangspunkts von 120°C bis 140°C auf,
wobei der Glasübergangspunkt und der Schmelzpunkt einer Faser durch Anheben der Temperatur auf 400°C mit einer Temperaturanstiegsgeschwindigkeit von 10°C pro Minute in einer Stickstoffatmosphäre unter Verwendung eines "TA3000-DSC", hergestellt durch die Mettler Corporation, bestimmen der Glasübergangstemperatur von den Wendepunkten, die auf dem DSC-Diagramm beobachtet werden, und Bestimmen der exothermen Spitzentemperatur als den Schmelzpunkt, gemessen werden.

2. Halbaromatische Polyamidfaser nach Anspruch 1, wobei das halbaromatische Polyamid 300 ppm bis 3000 ppm einer Alkalimetallhalogenidverbindung, bezogen auf Alkalimetall, umfasst.

3. Halbaromatische Polyamidfaser nach Anspruch 1 oder 2, wobei eine Festigkeitsbeständigkeitsrate nach dem Unterziehen der halbaromatischen Polyamidfaser einer Wärmebehandlung bei 150°C für 500 Stunden 80% oder mehr beträgt.

## Revendications

1. Fibre de polyamide semi-aromatique comprenant un polyamide semi-aromatique ayant un point de fusion de 280°C ou moins, dans laquelle la fibre de polyamide semi-aromatique satisfait toutes les conditions (1) à (3) suivantes :
(1) dans le polyamide semi-aromatique, un composant acide dicarboxylique est un acide dicarboxylique aromatique, et 40% en moles à 80% en moles d'un composant diamine est la 2-méthyl-1,8-octanediamine ;
(2) le polyamide semi-aromatique comprend de 50 ppm à 500 ppm d'un composé du cuivre en termes de cuivre, où le composé du cuivre est un ou plusieurs composés choisis parmi le groupe consistant en le chlorure de cuivre (I), le bromure de cuivre (I), l'iodure de cuivre (I), le chlorure de cuivre (II), le bromure de cuivre (II), l'iodure de cuivre (II), le phosphate de cuivre (II), le pyrophosphate de cuivre (II), le sulfure de cuivre et le nitrate de cuivre ; et des composés organiques du cuivre tels des sels de cuivre d'acides carboxyliques organiques comme l'acétate de cuivre ; et l'acétylacétonate de cuivre ; et
(3) la fibre de polyamide semi-aromatique a un pic de température du point de transition vitreuse allant de 120°C à 140°C,
dans laquelle le point de transition vitreuse et le point de fusion d'une fibre sont mesurés par élévation de la température à 400°C à une vitesse d'élévation de la température de 10°C/minute sous une atmosphère d'azote à l'aide d'un « TA3000-DSC » fabriqué par Mettler Corporation, déterminant la température de transition vitreuse à partir des points d'inflexion observés dans la courbe de DSC, et déterminant la température de pic exothermique comme point de fusion.

2. Fibre de polyamide semi-aromatique selon la revendication 1, dans laquelle le polyamide semi-aromatique comprend de 300 ppm à 3000 ppm d'un composé halogénure de métal alcalin en termes de métal alcalin.

3. Fibre de polyamide semi-aromatique selon la revendication 1 ou 2, dans laquelle le taux de rétention de résistance après avoir soumis la fibre de polyamide semi-aromatique à un traitement thermique à 150°C pendant 500 heures est de 80% ou plus.
